# EUROPEAN PATENT APPLICATION

(11) **EP 2 383 070 A1**
(43) Date of publication of application: **02.11.2011**
(21) Application number: 09833375.0
(22) Date of filing: 10.12.2009
(51) Int. Cl.: B23Q 3/00, F16B 2/16, F16B 7/04, F16B 7/14, F16L 37/32, F16L 37/36

(54) **CLAMPING SYSTEM WITH ATTACHED FLUID COUPLER**

(30) Priority: 17.12.2008 JP 2008336109
(71) Applicant: Kosmek Ltd., Hyogo 651-2241 (JP)
(72) Inventor: ARISATO, Akira, Kobe-shi Hyogo 651-2241 (JP)
(74) Representative: Horton, Andrew Robert Grant
(86) International application number: PCT/JP2009/070683
(87) International publication number: WO 2010/071072

(57) **Abstract**

During a released state of a clamping apparatus (4), a predetermined contact gap (B) is formed between a support surface (S) of a reference block (R) and a supported surface (T) of a movable block (M). By switching the clamping apparatus (4) from the released state to a locked state, an output member (31) provided to the reference block (R) causes, through an engaging member (34), the movable block (M) to move towards the reference block (R), thereby contacting the supported surface (T) to the support surface (S). A fluid coupler (8) has a butting contact stroke for ensuring an open state with a predetermined opening, which is set to a value not more than a dimension of the contact gap (B), and is structured so that, during the released state, respective leading end portions of a first joint (61) and a second joint (62) contact each other. Thereby, when the clamping apparatus (4) is switched to the locked state, the fluid coupler (8) is switched to the open state with the predetermined opening.

## Description

### TECHNICAL FIELD

The present invention relates to a clamping system in which a fluid coupler is attached to a clamping apparatus for fixing a movable block such as a work pallet or the like to a reference block.

### BACKGROUND ART

As such a clamping apparatus, conventionally, there is a clamping apparatus described in the following Patent Document 1 (International Publication WO2004/012902) This conventional art is structured as follows.
In a clamping apparatus which fixes a movable block having a supported surface to a reference block having a support surface, an upper portion of an output member pushes up the movable block during a released state of the clamping apparatus, and a predetermined contact gap is formed between the support surface and the supported surface. By switching the clamping apparatus from the released state to a locked state, the output member moves the movable block towards the reference block through an engaging member, and presses the supported surface against the support surface.

### Prior Art Document

### [Patent Document]

[Patent Document 1] International Publication WO2004/012902

### DISCLOSURE OF THE INVENTION

### Problems to be Solved by the Invention

In the clamping apparatus of the conventional art, the movable block, such as a work pallet, and the reference block are structured so as to be connectable with each other through a fluid coupler, and to and from a work clamp attached to the movable block, a pressurized fluid is supplied and discharged through the fluid coupler. However, since connecting the fluid coupler requires a predetermined butting contact stroke, there has been a problem that the height of the clamping system is increased.

Further, apart from the above problem, there have been the following problems.
Namely, in cases where the movable block such as a work pallet is attached to the reference block in a vertical direction, if the movable block (and a work or a work clamp) is light weighted, the supported surface of the movable block may excessively separate from the support surface of the reference block beyond a tolerance, when the movable block is descended and attached to the reference block, due to a reaction force based on the urging force of the valve-closing spring provided inside the fluid coupler. In such cases, there is a problem that an engaging member of the reference block is not smoothly engaged with an engaging hole for clamping on the movable block.

Further, if the weight of the movable block is relatively great, the supported surface of the movable block may separate from the support surface of the reference block beyond a tolerance, when the movable block is attached to the reference block in the horizontal direction, due to a reaction force based on the urging force of the valve-closing spring provided inside the fluid coupler. In this case too, there is a problem that the engaging member of the reference block is not smoothly engaged with the engaging hole for clamping on the movable block.
An object of the present invention is to solve the above problems.

### Means to Solve the Problems

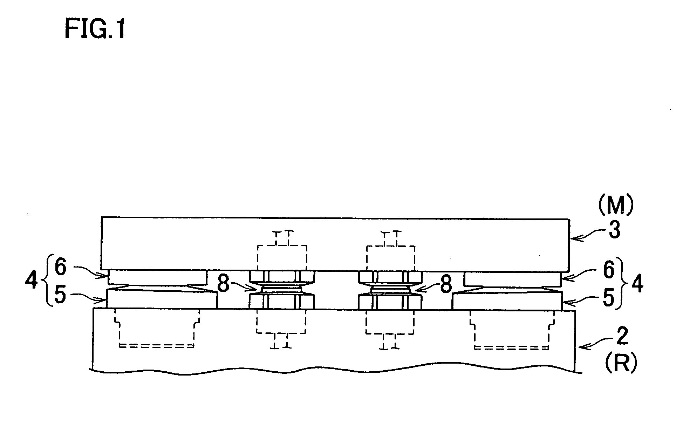

To achieve the above object, the present invention structures a clamping system with a fluid coupler as follows, for example, as shown in Fig. 1 to Fig. 4, or Fig. 5.
A clamping system with a fluid coupler includes a clamping apparatus 4 which fixes a movable block M having a supported surface T to a reference block R having a support surface S, and a fluid coupler 8 disposed apart from the clamping apparatus 4 by a predetermined inter-axial distance. During a released state of the clamping apparatus 4, a predetermined contact gap B is formed between the support surface S and the supported surface T. By switching the clamping apparatus 4 from its released state to a locked state, an output member 31 provided to the reference block R causes, through an engaging member 34, the movable block M to move towards the reference block R, thereby bringing the supported surface T into contact with the support surface S. The fluid coupler 8 has a first joint 61 which is provided to the reference block R and closed by a valve-closing elastic member 67 and a second joint 62 which is provided to the movable block M and closed by another valve-closing elastic member 74, and is structured to ensure an open state with a predetermined opening by butt-contacting the first joint 61 and the second joint 62 against respective urging forces of the both valve-closing elastic members 67, 74. The fluid coupler 8 has a butting contact stroke for ensuring the open state with the predetermined opening, which is set to a value not more than a dimension of the contact gap B, and during the released state, the respective leading end portions of the first joint 61 and the second joint 62 contact each other or face each other with a minute gap between the first joint 61 and the second joint 62. Thereby, the fluid coupler 8 is switched to the open state with the predetermined opening when the clamping apparatus 4 is switched to the locked state.
Note that the minute gap is a gap smaller than the predetermined contact gap B, and is any small gap such that the fluid coupler 8 is switched to the open state with the predetermined opening, when the clamping apparatus 4 is switched to the locked state.

The present invention yields the following functions and effects.
During the released state of a clamping apparatus, the predetermined contact gap is formed between the support surface of the reference block and the supported surface of the movable block, and the fluid coupler has the butting contact stroke for ensuring the open state with the predetermined opening, which is set to a value not more than a dimension of the contact gap, and during the released state, the respective leading end portions of the first joint and the second joint structuring the fluid coupler contact each other or face each other with a minute gap between the first joint and the second joint, and the fluid coupler is switched to the open state with the predetermined opening when the clamping apparatus is switched to the locked state. Thus, the fluid coupler, at the time of butt-contacting operation, is able to both ensure a sufficient opening and reduce the butting contact stroke. As the result, the height of the clamping system can be reduced.
Further, as described above, since the respective leading end portions of the first joint and the second joint are structured to contact each other or face each other with a minute gap between the first joint and the second joint during the released state, when the movable block is attached to the reference block, the reaction force based on the urging forces of the valve-closing elastic members provided inside the fluid coupler hardly or never acts on the reference block. Therefore, the supported surface of the movable block is prevented from excessively separating from the support surface of the reference block, beyond the tolerance, and the engaging member of the reference block smoothly engages with the engaging hole for clamping on the movable block.

To the present invention, the following structure is preferably added.
Namely, the engaging member includes a plurality of balls 34 which are moveable outwardly in radial directions by a locking movement of the output member 31, and which are supported by the reference block R, peripherally spaced at predetermined intervals. The movable block M is provided with an engaging hole 13 with which the plurality of balls 34 are engaged. When the output member 31 makes the locking movement, the output member 31 causes, through the plurality of the balls 34 and the engaging hole 13, the movable block M to be pressed against the reference block R.
With the structure, the clamping apparatus is simply structured.

Further, to the present invention, the following structure is preferably added.
Namely, a socket bore 11 is opened on a supported surface T side of the movable block M, and in the socket bore 11, a positioning hole 12 and an engaging hole 13 are formed in this order from an open end. An annular plug portion 21 to be inserted into the socket bore 11 is projected from the reference block R. A shuttle member 23 capable of diametrically expanding and contracting is disposed between the plug portion 21 and the positioning hole 12. The shuttle member 23 is supported by one (21, 12) of both the plug portion 21 and the positioning hole 12 so that the shuttle member 23 is reciprocable in the axial directions within a predetermined range, while being able to make a tapering engagement with another one (12, 21) of the both the plug portion 21 and the positioning hole 12. The shuttle member 23 has a tapered surface 28, 53 which is formed so as to be narrowed towards the engaging hole 13. An advancing means 24 is provided for moving the shuttle member 23 in a direction to make the tapering engagement tight. The output member 31 is inserted into a cylindrical hole 21a of the plug portion 21 so as to be movable in the axial directions. In the outer peripheral space of the output member 31, the engaging member 34 which is movable between a radially outward engaging position X and a radially inward disengaging position Y is disposed. By driving the output member 31 for clamping in a direction towards a base end, the output portion 36 of the output member 31 moves the engaging member 34 to the engaging position X to engage the engaging member 34 with the engaging hole 13, thereby enabling the movable block M to move towards the reference block R.
With the structure, there is provided a clamping system having a positioning function.

Further, to the present invention, the following structure is preferably added.
One joint 61 out of both the first joint 61 and the second joint 62 includes a valve seat 65 provided to an inner periphery of a leading end portion of a cylindrical casing 64, and a rod-like valve body 66 is provided inside the cylindrical casing 64 and seal-contacted to the valve seat 65 by the valve-closing elastic member 67. The other joint 62 out of the both joints includes another rod-like valve body 72 provided inside another cylindrical casing 71, and another valve seat 73 is seal-contacted from a base end side to the outer periphery of a leading end portion of the other rod-like valve body 72, by the other valve-closing elastic member 74. By butt-contacting the both joints 61, 62, the cylindrical casing 64 causes the other valve seat 73 to retract towards the base end side, and the other rod-like valve body 72 causes the rod-like valve body 66 to retract towards the base end side, thereby switching the fluid coupler 8 to the open state with the predetermined opening.
With the structure, the fluid coupler is simply structured.

In the present invention, when the clamping apparatus 4 is switched to the released state, the output member 31 of the clamping apparatus 4 preferably receives the movable block M to form the predetermined contact gap B.

Further, in the present invention, when the clamping apparatus 4 is switched to the released state, the first joint 61 may receive the movable block M through the second joint 62 to form a predetermined contact gap B.

### BRIEF DESCRIPTION OF THE DRAWINGS

Fig. 1 shows one embodiment of the present invention, and is an elevational view of a clamping system in a locked state.
Fig. 2 is an elevational sectional view showing a state of the clamping system in which a movable block is separated from a reference block.
Fig. 3 is a view similar to Fig. 2, showing a released state in which the movable block is attached to the reference block.
Fig. 4 is a view similar to Fig. 2, showing the locked state in which the movable block is fixed to the reference block.
Fig. 5 is a partial view similar to Fig. 3, showing another embodiment of the present invention.

### REFERENCE NUMERALS

2: Clamp pallet, 3: Work pallet, 4: Clamping apparatus, 8: Fluid coupler, 11: Socket bore, 12: Positioning hole, 13: Engaging hole, 21: Plug portion, 21a: Cylindrical hole, 23: Shuttle member, 24: Advancing means (Coned disc spring), 28: Tapered surface, 31: Output member (rod), 34: Engaging member (ball), 36: Output portion (Output surface ), 53: Tapered surface, 61: First joint, 62: Second joint, 64: Cylindrical casing, 65: Valve seat, 66: Rod-like valve body, 67: Valve-closing elastic member (valve-closing spring), 71: Another cylindrical casing, 72: Another rod-like valve body, 73: Another valve seat, 74: Another valve-closing elastic member (valve-closing spring), B: Predetermined contact gap, M: Movable block, R: Reference block, S: Support surface, T: Supported surface, X: Engaging position, Y: disengaging position.

### BEST MODE FOR CARRYING OUT THE INVENTION

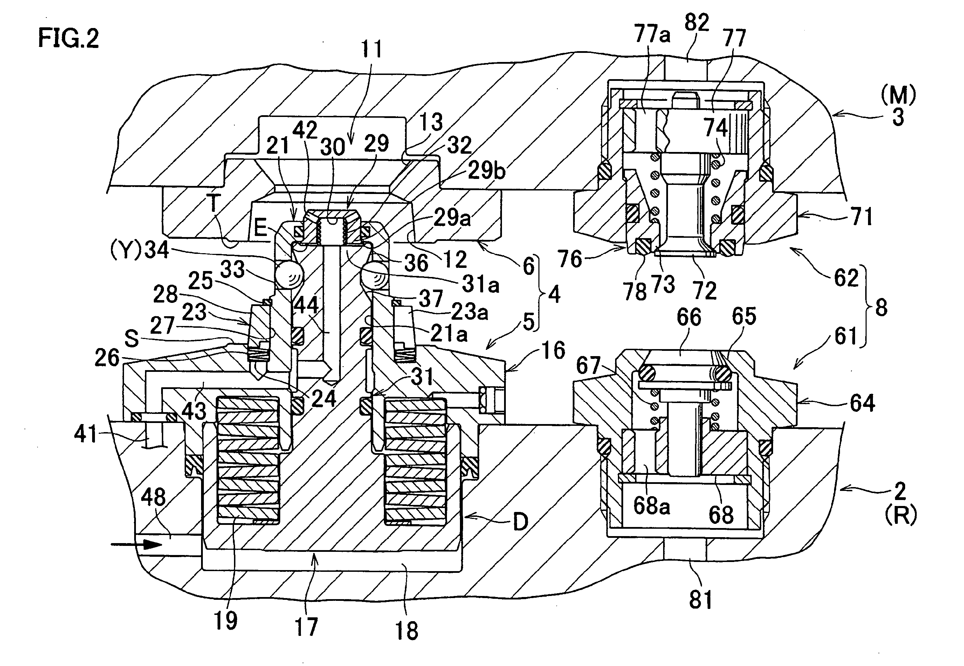

The following describes one embodiment of the present invention, with reference to Fig. 1 to Fig. 4.
First, with reference to Fig. 1 and Fig. 2, the entire structure of a clamping system is explained. Fig. 1 is an elevational view showing a locked state of the clamping system. Fig. 2 is a partial elevational sectional view showing a state of the clamping system in which a movable block is separated from a reference block.

A clamp pallet 2 which is a reference block R is securely installed on a top surface of a table (not shown) of a machining center. To the clamp pallet 2, a work pallet 3 of a movable block M is fixed by a plurality of clamping apparatuses 4. Apart from the clamping apparatuses 4 by a predetermined inter-axial distance, fluid couplers 8 (two in this embodiment) is disposed, respectively. Note that a workpiece can be attached to and detached from the top surface of the work pallet 3 by a plurality of work clamps.

The clamping apparatus 4 includes a datum clamp 5 fixed to the clamp pallet 2 by a plurality of bolts (not shown) and a datum ring 6 fixed to the work pallet 3 by a plurality of bolts (not shown).

The datum ring 6 has a mid portion projecting downwards, the bottom surface of which forms a supported surface T, while a socket bore 11 is opened on the supported surface T. The socket bore 11 is structured by the datum ring 6 and the work pallet 3, and contains the tapered positioning hole 12 and a tapered engaging hole 13 in order from the bottom.

The datum clamp 5 comprises a cover block 16 fixed to the clamp pallet 2, a piston 17 hermetically inserted between the cover block 16 and the clamp pallet 2, a hydraulic chamber 18 formed below of the piston 17, and a clamp spring 19 attached between the piston 17 and the cover block 16. Although the clamp spring 19 is structured by a plurality of coned disc springs vertically superposed one on another, the clamp spring 19 may be a compression coil spring.
The piston 17, the hydraulic chamber 18 and the clamp spring 19 compose driving means D.

The cover block 16 has a mid portion from which an annular plug portion 21 projects upwardly, and this plug portion 21 is inserted into the socket bore 11. In a position radially outside of the lower portion of the plug portion 21, the cover block 16 slightly projects upwards, and the top surface of this annular projection forms a support surface S.
On a lower half portion of the plug portion 21, an annular shuttle member 23 is fitted, and this shuttle member 23 is urged upwards through a plurality of coned disc springs (advancing means) 24 and restricted by a retaining ring 25.

More specifically, the annular shuttle member 23 has an inner peripheral surface formed by a straight surface 27 and has an outer peripheral surface formed by the tapered surface 28, and by providing slits 23a in an annular wall of the shuttle member 23 or grooves in the inner peripheral surface thereof (not shown), the tapered surface (tapered outer peripheral surface) 28 and the straight surface 27 can diametrically expand and contract. The straight surface 27 is supported by an outer peripheral surface of the plug portion 21 so as to be movable in the axial directions. The tapered surface 28 is formed to narrow upwards so as to make a tapering engagement with the tapered positioning hole 12. Furthermore, an annular attachment groove 26 is formed on the cover block 16 along the outer periphery of the plug portion 21. The coned disc springs 24 are inserted into the annular attachment groove 26, and the lower portion of the shuttle member 23 is fitted into the groove 26.

A transmission member 29 is supported by the upper end portion of a cylindrical hole 21a of the plug portion 21 so as to be vertically movable within a predetermined range, and a rod (output member) 31 is inserted into the cylindrical hole 21a below the transmission member 29 so as to be vertically movable. The lower portion of the rod 31 is connected to the piston 17.
To the transmission member 29, a spring accommodation hole 30 is formed, and between the top wall of the spring accommodation hole 30 and the upper end surface of the rod 31, an advancing spring 32 is attached. By this advancing spring 32, the transmission member 29 is urged upwards, and an upward movement of the transmission member 29 is restricted by a flange 29a so as not to exceed a predetermined range. Further, during a separated state shown in Fig. 2, a pressure receiving portion 29b, which is the lower end of the transmission member 29, is not in contact with the pushing portion 31a, which is the upper end of the rod 31, by the existence of a gap E between the two.

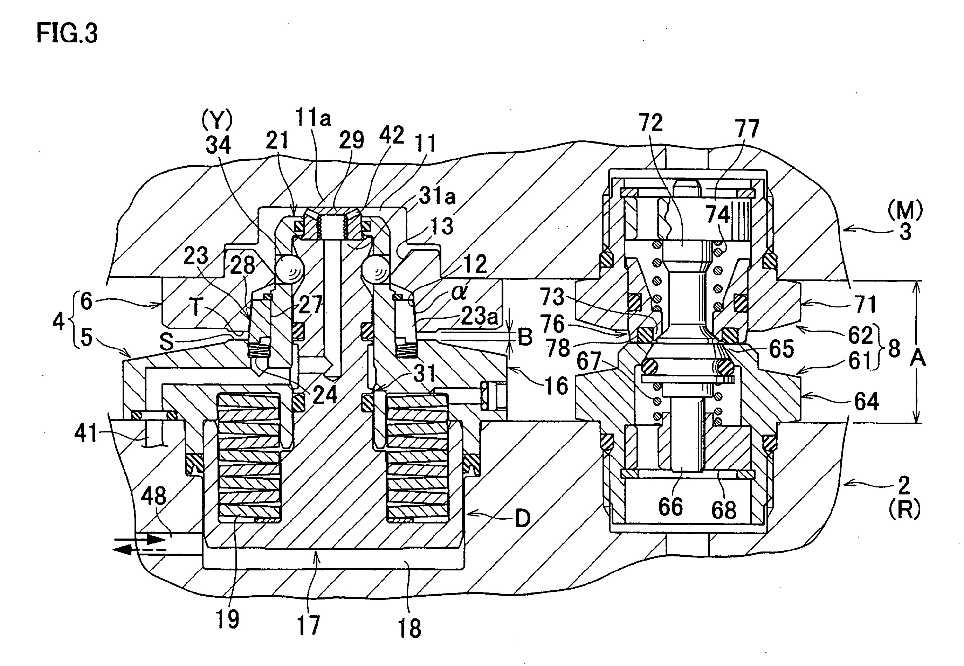

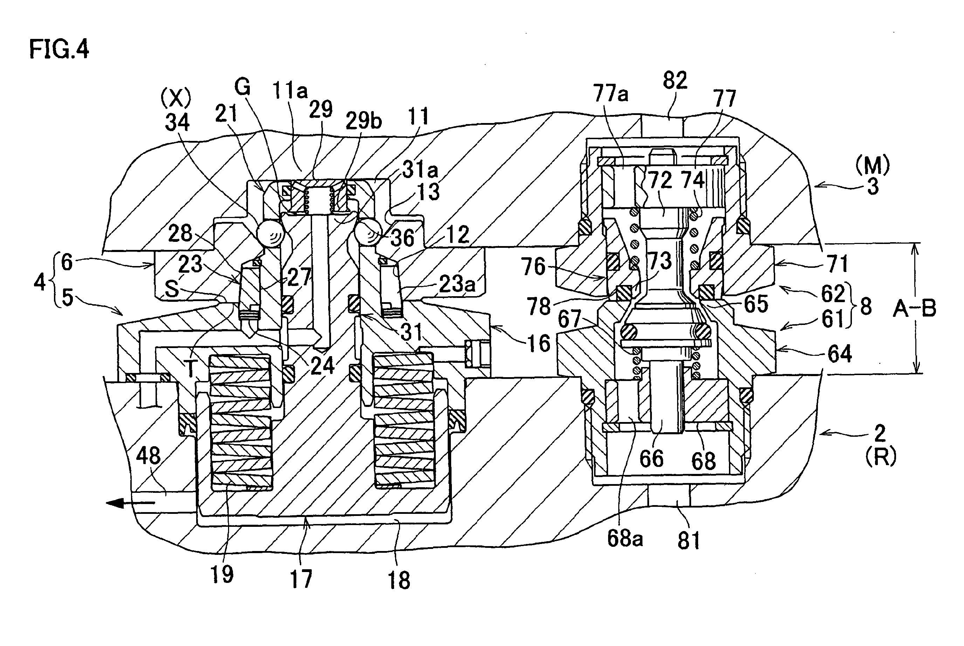

At an upper portion of the plug portion 21, a plurality of penetration holes 33 are provided peripherally spaced at a regular interval, and in each of the penetration holes 33, an engaging ball (engaging member) 34 is supported so as to be able to move between a radially outward engaging position X (see Fig. 4) and a radially inward disengaging position Y (see Fig. 2 or Fig. 3). On an upper portion of an outer peripheral surface of the rod 31, an output surface (output portion) 36 for clamping and a retreat groove 37 are formed with vertical continuity in correspondence with each of the balls 34.

Further, there is provided means which cleans the fitting surfaces of the clamping apparatus 4. More specifically, the clamp pallet 2 is provided with a supply port 41 for compressed air (cleaning fluid) and the transmission member 29 is provided, at its upper portion, with a blowout hole 42 obliquely and upwardly. The supply port 41 is communicatively connected to the blowout hole 42 through a horizontal flow passage 43 within the cover block 16, a vertical flow passage 44 within the rod 31, and the spring accommodation hole 30. The horizontal flow passage 43 has a midway portion which is communicatively connected to the attachment groove 26.

The clamping apparatus 4 operates in the following manner as shown in Fig. 2, Fig. 3, and Fig. 4. Fig. 3 is a view similar to Fig. 2, showing a released state in which the work pallet 3 is attached to the clamp pallet 2. Fig. 4 is a view similar to Fig. 2, showing the locked state in which the work pallet 3 is fixed to the clamp pallet 2.

During a separated state shown in Fig. 2, pressurized oil is supplied to the hydraulic chamber 18 through a pressurized oil supply and discharge passage 48. Thus, an oil pressure of the hydraulic chamber 18 causes the piston 17 to raise the rod 31 against the clamp spring 19, and each ball 34 faces the retreat groove 37 to be movable to the disengaging position Y shown in the figure. Further, the shuttle member 23 is held at a raised position by the coned disc springs (advancing means) 24.

When the work pallet 3 is descended, the tapered positioning hole 12 is guided by the tapered surface 28 of the shuttle member 23, and subsequently, as shown in Fig. 3, the socket bore 11 has a top wall 11a brought into contact with the pushing portion 31a of the rod 31 through the transmission member 29, thereby enabling the rod 31 to receive the work pallet 3. In this case, between the support surface S and the supported surface T, a predetermined contact gap B is formed.
Note that a dimension of the predetermined contact gap B, in this embodiment, is set to a value of approximately 1mm; however, the dimension may be set to a value within a range from approximately 0.5 mm to approximately 3mm.
In a state shown in Fig. 3, the compressed air discharged through the blowout hole 42 passes through the gap between the top wall 11a and the upper end surface of the plug portion 21, and subsequently cleans a surface of the engaging hole 13, a fitting gap α between the tapered surface 28 of the shuttle member 23 and the tapered positioning hole 12, and the contact gap B in order, and is discharged to the outside thereafter.

In the state shown in Fig. 3, when the pressurized oil in the hydraulic chamber 18 is discharged through the supply and discharge passage 48, the clamp spring 19 causes the rod 31 to descend strongly through the piston 17. Then, first, the work pallet 3 descends by its own weight following the descending rod 31 to bring the tapered positioning hole 12 into contact with the tapered surface 28 of the shuttle member 23. This allows the work pallet 3 to slightly compress the coned disc springs 24 through the shuttle member 23, and the tapered positioning hole 12 moves while aligning so that the axis of the tapered positioning hole 12 coincides with that of the plug portion 21.

Substantially at the same time, as shown in Fig. 4, each output surface 36 of the rod 31 pushes each of the balls 34 to the radially outward engaging position X, and the radial pushing force is converted to a downward force through the tapered engaging hole 13, and by the downward force, the work pallet 3 is strongly descended.
Then the tapered positioning hole 12 makes a strong tapering engagement with the tapered surface 28 of the shuttle member 23 resulting in a movement while aligning, whereby the axis of the tapered positioning hole 12 precisely coincide with that of the plug portion 21 and the shuttle member 23 further descends against the coned disc springs 24, and the supported surface T is received by the support surface S. Thus, the work pallet 3 is constrained horizontally by the plug portion 21 through the shuttle member 23 which is radially contracted with the tapered positioning hole 12 and vertically by the support surface S, and as a result, the work pallet 3 is precisely positioned and strongly fixed to the clamp pallet 2.
Then, during the locked state shown in Fig. 4, a transmission gap G is formed between the pushing portion 31a of the rod 31 having been descended by the piston 17, and the pressure receiving portion 29b of the transmission member 29 having been descended by the work pallet 3.

To switch from the locked state shown in Fig. 4 to the released state shown in Fig. 3, the pressurized oil is supplied to the hydraulic chamber 18 during the state shown in Fig. 4 so as to cause the rod 31 be ascended by the piston 17. Then, the rod 31 runs upwards through the transmission gap G without any additional contact, and subsequently, as shown in Fig. 3, each of the balls 34 is allowed to face the retreat groove 37 to switch over to the disengaging position Y (Fig. 3 shows the state where the balls 34 are already switched over), and the rod 31 is brought into contact with the top wall 11a of the socket bore 11 through the transmission member 29 to push up the work pallet 3. Thereby, as shown in Fig. 3, there are the fitting gap α formed on an upper side of the shuttle member 23 and the contact gap B on an upper side of the support surface S. In consequence, the work pallet 3 can be easily removed from the clamp pallet 2.

In the released state mentioned above, the distance of the upward movement of the transmission member 29 is to be the value obtained by subtracting the distance by which the rod 31 moves without any additional contact (the transmission gap G shown in Fig. 4) from the total distance by which the rod 31 moves upwards, and hence the projecting distance of the transmission member 29 is reduced. Therefore, the height of the socket bore 11 can be also reduced. Accordingly, the clamping apparatus 4 can be manufactured in a lower and compact design.

The fluid coupler 8 provided to the clamping system is structured as follows, as shown in Fig. 2.
The fluid coupler 8 includes a first joint 61 provided to the clamp pallet 2, and a second joint 62 provided to the work pallet 3.
The first joint 61 includes a valve seat 65 provided to an inner periphery of an upper end portion (leading end portion) of a cylindrical casing 64, a rod-like valve body 66 provided inside the cylindrical casing 64, and a valve-closing spring (valve-closing elastic member)67 which seal-contacts the rod-like valve body 66 to the valve seat 65. The rod-like valve body 66 is supported by a guide cylinder 68 attached to the cylindrical casing 64. Between the guide cylinder 68 and the rod-like valve body 66, the valve-closing spring 67 is attached.

The second joint 62 includes another rod-like valve body 72 provided to another cylindrical casing 71, another valve seat 73 which is seal-contacted to an outer periphery of the lower end portion (leading end portion) of the other rod-like valve body 72 from the upper side (base end side), and another valve-closing spring (valve-closing elastic member)74 which urges the valve seat 73 downward.
More specifically, at the lower half portion of the other cylindrical casing 71, a sliding cylinder 76 is hermetically supported so as to be vertically moveable, and the valve seat 73 is provided to the inner periphery of the lower portion of the sliding cylinder 76. Further, at the upper half portion of the other cylindrical casing 71, a guide member 77 is supported so as to be vertically moveable, and the upper portion of the other rod-like valve body 72 is attached to this guide member 77. Between the guide member 77 and the sliding cylinder 76, the valve-closing spring 74 is attached. Further, to the lower portion of the sliding cylinder 76, a sealing member 78 for contacting is attached.

The fluid coupler 8 operates as follows.
During the separated state of Fig. 2, the upper portion of the rod-like valve body 66 is seal-contacted to the valve seat 65 of the cylindrical casing 64 by the valve-closing spring 67 of the first joint 61, and the valve seat 73 of the sliding cylinder 76 is seal-contacted to the lower portion of the rod-like valve body 72 by the valve-closing spring 74 of the second joint 62.

When the work pallet 3 is descended from the position of the separated state shown in Fig. 2 to the position of the released state shown in Fig. 3, as shown in Fig. 3, the work pallet 3 is received by the clamp pallet 2 through the transmission member 29 and the rod 31, and the predetermined contact gap B is formed between support surface S and the supported surface T. Further, during the released state shown in Fig. 3, the upper end surface (leading end surface) of the cylindrical casing 64 of the first joint 61 contacts the lower end surface (leading end surface) of the sliding cylinder 76 of the second joint 62, and the both end surfaces are sealed by the sealing member 78 for contacting. At this time, the distance between the top surface of the clamp pallet 2 and the bottom surface of the work pallet 3 is A.

Next, the clamping apparatus 4 is switched from the released state shown in Fig. 3 to the locked state shown in Fig. 4. Then, as shown in Fig. 4, with the locking drive force of the clamping apparatus 4, the first joint 61 and the second joint 62 are butt-contacted to each other, against the urging forces of the two valve-closing springs 67, 74. Thereby, the cylindrical casing 64 of the first joint 61 causes the other valve seat 73 to retract upwardly (towards the base end side) , and the rod-like valve body 72 of the second joint 62 causes the rod-like valve body 66 of the first joint 61 to retract downwardly (towards the base end side).
Note that, during the locked state shown in Fig. 4, the distance between the top surface of the clamp pallet 2 and the bottom surface of the work pallet 3 is A - B.

During an open state of the fluid coupler 8, a fluid supply and discharge port 81 of the first joint 61 is communicatively connected to a fluid supply and discharge port 82 of the second joint 62, through the communicating hole 68a of the guide cylinder 68, an open gap between the valve seat 65 and the rod-like valve body 66, an open gap between the other rod-like valve body 72 and the other valve seat 73, and a communicating hole 77a of the guide member 77.

Here, in the fluid coupler 8, a butting contact stroke for ensuring the open state with a predetermined opening is set to a value which is not more than a dimension of the contact gap B. Thereby, the fluid coupler 8, during the locked state shown in Fig. 4, is switched to the open state with at least the predetermined opening, and a sufficient opening for supplying or discharging a pressurized fluid is ensured. Thus, the fluid coupler 8, at the time of butt-contacting operation, is able to both ensure a sufficient opening and reduce the butting contact stroke. As the result, the height of the clamping system can be reduced.

Further, as described above, since the respective leading end portions of the first joint 61 and the second joint 62 are structured to contact each other during the released state shown in Fig. 3, when the work pallet 3 is attached to the clamp pallet 2, the reaction force based on the urging forces of the valve-closing springs 67, 74 hardly acts on the work pallet 3. Thereby, the supported surface T of the work pallet 3 is prevented from excessively separating from the support surface S of the clamp pallet 2, beyond the tolerance. As the result, at the time of the locking drive, the engaging balls 34 are reliably and smoothly engaged with the engaging hole 13 of the clamp pallet 2.

Note that, the fluid coupler 8, at the time of switching over from the locked state shown in Fig. 4 to the released state shown Fig. 3, operates through a procedure which is substantially the reversed procedure of the operation at the time of the locking drive.

The respective leading end portions of the first joint 61 and the second joint 62 may be structured so as to face each other with a minute gap between the leading end portions during the released state shown in Fig. 3, instead of structuring them to contact each other as is exemplified hereinabove. In this case, the minute gap is a gap smaller than the predetermined contact gap B, and is any small gap such that the fluid coupler 8 is switched to the open state with the predetermined opening, when the clamping apparatus 4 is switched to the locked state.

Further, the predetermined contact gap B may be formed by the first joint 61 receiving the work pallet 3 through the second joint 62 when the clamping apparatus 4 is switched to the released state, instead of forming the predetermined contact gap B by the rod 31 receiving the work pallet 3. In this case, the cylindrical casing 64 of the first joint 61 may cause the sliding cylinder 76 to retract upwardly, while receiving the work pallet 3 by the urging forces of the two valve-closing springs 67, 74.

Note that, the first joint 61 and the second joint 62 may be the vertically reverse of the arrangement shown in the figures, and further, no particular problem will arise even if the structure is different from the exemplified structure. Further, the valve-closing elastic members may be rubber or the like, instead of the exemplified valve-closing springs 67, 74.

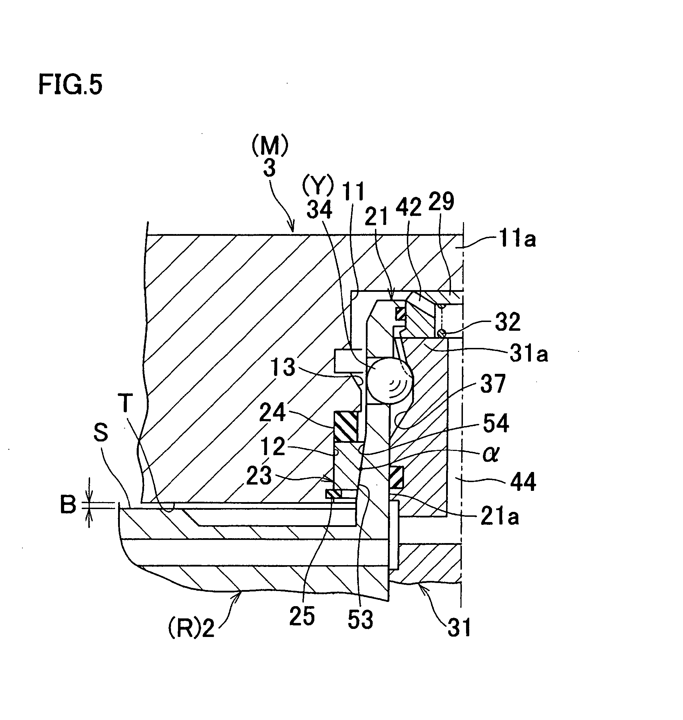

Fig. 5 is a partial view similar to Fig. 3, showing another embodiment of the present invention.
In the other embodiment, the members having the same structures as those of the foregoing embodiment are basically given the same reference symbols, and the following only explains the structures that are different from those of the foregoing embodiment.
The positioning hole 12 of the socket bore 11 formed in the work pallet 3 is straight. By this straight positioning hole 12, the straight surface on an outer periphery of the shuttle member 23 is supported so as to be vertically movable. The shuttle member 23 is urged downwards by the advancing means 24 made of rubber, and the descendant of the advancing means 24 is restricted by the retaining ring 25 fitted into a lower portion of the positioning hole 12. Note that the advancing means 24 can be a spring instead of rubber.
The shuttle member 23 has an inner surface formed with a tapered surface (tapered inner peripheral surface) 53, which makes a tapering engagement with a tapered outer peripheral surface 54 of the plug portion 21. The tapered surface 53 is formed so as to narrow upwardly.

The above described embodiments can be modified as follows.
The plurality of superposed coned disc springs (advancing means) 24 urging the shuttle member 23 may be replaced with a single spring, and further they may be replaced with other kinds of springs or rubber such as a compression coil spring or the like. Further, the advancing means may adopt a piston on which a pressurized fluid such as a pressurized oil or compressed air acts.

The shuttle member 23 of the clamping apparatus may be composed of not only the exemplified annular integral structure but a plurality of divided portions arranged annularly.
In addition, the engaging member 34 of the clamping apparatus may be a collet which engages with the straight engaging hole by a frictional force or a plastic deformation force instead of the exemplified balls which engage with the tapered engaging hole. The clamping apparatus may be driven for clamping through fluid pressure force such as oil pressure and air pressure instead of the spring force.

The shuttle member 23 may be omitted. In this case, in the embodiment shown in Fig. 1 through Fig. 4, the tapered outer peripheral surface 28 is formed integrally with the outer peripheral surface of the plug portion 21, while in the embodiment shown in Fig. 5, the tapered inner peripheral surface 53 is formed integrally with the socket bore 11.
Both the tapered outer peripheral surface 28 formed integrally with the plug portion 21 and the tapered inner peripheral surface 53 formed integrally with the socket bore 11 are preferably formed to permit elastic deformation in the axial and radial directions, for example, by providing a hollow portion therein.

The reference block R may be a table of a machining center or various machines instead of the exemplified clamp pallet 2. Also, the movable block M may be a work piece instead of the exemplified work pallet 3. The reference block R and the movable block M may be disposed in a vertically reversed manner and may be connected to each other horizontally or obliquely instead of vertically as exemplified.
Further, it is a matter of course that a clamping apparatus of the present invention can be used to clamp not only the work pallet and the work piece but also a metal die, an attachment or the like. The clamping apparatus can be employed not only in plural sets but also in only a single set.

## Claims

1. A clamping system with a fluid coupler, comprising:
a clamping apparatus (4) which fixes a movable block (M) having a supported surface (T) to a reference block (R) having a support surface (S), and a fluid coupler (8) disposed apart from the clamping apparatus (4) by a predetermined inter-axial distance,
wherein, during a released state of the clamping apparatus (4), a predetermined contact gap (B) is formed between the support surface (S) and the supported surface (T), and by switching the clamping apparatus (4) from its released state to a locked state, an output member (31) provided to the reference block (R) causes, through an engaging member (34), the movable block (M) to move towards the reference block (R) , thereby bringing the supported surface (T) into contact with the support surface (S),
the fluid coupler (8) has a first joint (61) which is provided to the reference block (R) and closed by a valve-closing elastic member (67) and a second joint (62) which is provided to the movable block (M) and closed by another valve-closing elastic member (74), and is structured to ensure an open state with a predetermined opening by butt-contacting the first joint (61) and the second joint (62) against respective urging forces of the both valve-closing elastic members (67) (74), and
the fluid coupler (8) has a butting contact stroke for ensuring the open state with the predetermined opening, which is set to a value not more than a dimension of the contact gap (B) , and during the released state, the respective leading end portions of the first joint (61) and the second joint (62) contact each other or face each other with a minute gap between the first joint (61) and the second joint (62), thereby, the fluid coupler (8) is switched to the open state with the predetermined opening when the clamping apparatus (4) is switched to the locked state.

2. The clamping system with a fluid coupler, according to claim 1, wherein:
the engaging member includes a plurality of balls (34) which are moveable outwardly in radial directions by a locking movement of the output member (31), and which are supported by the reference block (R), peripherally spaced at predetermined intervals,
the movable block (M) is provided with an engaging hole (13) with which the plurality of balls (34) are engaged,
when the output member (31) makes the locking movement, the output member (31) causes, through the plurality of the balls (34) and the engaging hole (13), the movable block (M) to be pressed against the reference block (R).

3. The clamping system with a fluid coupler, according to claim 1, wherein:
a socket bore (11) is opened on a supported surface (T) side of the movable block (M), and in the socket bore (11), a positioning hole (12) and an engaging hole (13) are formed in this order from an open end;
an annular plug portion (21) to be inserted into the socket bore (11) is projected from the reference block (R);
a shuttle member (23) capable of diametrically expanding and contracting is disposed between the plug portion (21) and the positioning hole (12) , the shuttle member (23) is supported by one (21, 12) of both the plug portion (21) and the positioning hole (12) so that the shuttle member (23) is reciprocable in the axial directions within a predetermined range, while being able to make a tapering engagement with another one (12, 21) of the both the plug portion (21) and the positioning hole (12), the shuttle member (23) has a tapered surface (28, 53) which is formed so as to be narrowed towards the engaging hole (13), and an advancing means (24) is provided for moving the shuttle member (23) in a direction to make the tapering engagement tight;
the output member (31) is inserted into a cylindrical hole (21a) of the plug portion (21) so as to be movable in the axial directions, and in the outer peripheral space of the output member (31), the engaging member (34) which is movable between a radially outward engaging position (X) and a radially inward disengaging position (Y) is disposed; and
by driving the output member (31) for clamping in a direction towards a base end, the output portion (36) of the output member (31) moves the engaging member (34) to the engaging position (X) to engage the engaging member (34) with the engaging hole (13), thereby enabling the movable block (M) to move towards the reference block (R).

4. The clamping system with a fluid coupler, according to any one of claims 1 to 3, wherein:
one joint (61) out of both the first joint (61) and the second joint (62) includes a valve seat (65) provided to an inner periphery of a leading end portion of a cylindrical casing (64), and a rod-like valve body (66) which is provided inside the cylindrical casing (64) and seal-contacted to the valve seat (65) by the valve-closing elastic member (67),
the other joint (62) out of the both joints includes another rod-like valve body (72) provided inside another cylindrical casing (71), and another valve seat (73) which is seal-contacted from a base end side to the outer periphery of a leading end portion of said another rod-like valve body (72), by said another valve-closing elastic member (74),
by butt-contacting the both joints (61) (62), the cylindrical casing (64) causes said another valve seat (73) to retract towards the base end side, and said another rod-like valve body (72) causes the rod-like valve body (66) to retract towards the base end side, thereby switching the fluid coupler (8) to the open state with the predetermined opening.

5. The clamping system with a fluid coupler, according to any one of claims 1 to 3, wherein:
when the clamping apparatus (4) is switched to the released state, the output member (31) of the clamping apparatus (4) receives the movable block (M) to form the predetermined contact gap (B).

6. The clamping system with a fluid coupler, according to any one of claims 1 to 3, wherein:
when the clamping apparatus (4) is switched to the released state, the first joint (61) receives the movable block (M) through the second joint (62) to form a predetermined contact gap (B).
